(19) Europäisches Patentamt
European Patent Office
Office européen des brevets

(11) **EP 4 160 751 A1**

(12) **EUROPEAN PATENT APPLICATION**
published in accordance with Art. 153(4) EPC

(43) Date of publication:
**05.04.2023 Bulletin 2023/14**

(21) Application number: **20943532.0**

(22) Date of filing: **30.06.2020**

(51) International Patent Classification (IPC):
**H01M 4/66** (2006.01)   **H01M 4/80** (2006.01)

(52) Cooperative Patent Classification (CPC):
**H01M 4/66; H01M 4/80;** Y02E 60/10

(86) International application number:
**PCT/CN2020/099422**

(87) International publication number:
**WO 2022/000308 (06.01.2022 Gazette 2022/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **ZHANG, Yibo
Ningde, Fujian 352100 (CN)**

(74) Representative: **Klunker IP
Patentanwälte PartG mbB
Destouchesstraße 68
80796 München (DE)**

(54) **BIPOLAR CURRENT COLLECTOR, ELECTROCHEMICAL DEVICE, AND ELECTRONIC DEVICE**

(57)     This application provides a bipolar current collector, an electrochemical device, and an electronic device. The bipolar current collector includes a porous substrate, a first metal, and a second metal. The first metal exists on one surface of the porous substrate. The second metal exists on another surface of the porous substrate. At least one of the first metal or the second metal exists inside the porous substrate. The porous substrate possesses advantages of oxidation resistance, reduction resistance, and ion insulation, and some mechanical strength. A metal layer of the bipolar current collector possesses advantages of high electron conductivity and ion insulativity, high mechanical strength, and high thermal stability. In addition, both surfaces of the bipolar current collector are rough to some extent, thereby optimizing interfacial bonding of positive and negative films on both sides to a composite bipolar current collector, and increasing the bonding force of the films.

FIG. 1

EP 4 160 751 A1

**Description**

**TECHNICAL FIELD**

This application relates to the field of batteries, and in particular, to a bipolar current collector, an electrochemical device containing the bipolar current collector, and an electronic device.

**BACKGROUND**

Lithium-ion batteries are widely used in the field of consumer electronics by virtue of many advantages such as high volumetric and gravimetric energy densities, a long cycle life, a high nominal voltage, a low self-discharge rate, a small size, and a light weight. In recent years, with rapid development of electric vehicles and portable electronic devices, people are posing higher requirements on the energy density, safety performance, cycle performance, and the like of a battery, and need to develop a new lithium-ion battery with overall performance enhanced comprehensively.

To increase an output voltage of an lithium-ion battery, a technical solution that connects lithium-ion batteries in series has been adopted currently. In this technical solution, two electrode assemblies are placed in a hermetic chamber, and tabs are led out of the two electrode assemblies respectively. The two electrode assemblies are connected in series by connecting the tabs in series, thereby increasing the output voltage. Another technical solution is to dispose a partition plate between two electrode assemblies, and lead out tabs from the two electrode assemblies respectively. The two electrode assemblies are connected in series by connecting the tabs in series, thereby increasing the output voltage.

**SUMMARY**

An objective of this application is to provide a bipolar current collector, an electrochemical device, and an electronic device to improve the output voltage of the electrochemical device.

A first aspect of this application provides a bipolar current collector, including a porous substrate, a first metal M, and a second metal N. The first metal M exists on one surface of the porous substrate. The second metal N exists on another surface of the porous substrate. At least one of the first metal M or the second metal N exists inside the porous substrate.

A material of the porous substrate includes at least one of a carbon material, a polymer material, or a third metal.

A porosity of the porous substrate is 20% to 90%.

In an embodiment of this application, the carbon material includes at least one of a single-walled carbon nanotube film, a multi-walled carbon nanotube film, a carbon felt, a porous carbon film, carbon black, acetylene black, fullerene, conductive graphite, or graphene.

In an embodiment of this application, the polymer material includes at least one of polyethylene terephthalate, polybutylene terephthalate, polyethylene naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-co-hexafluoropropylene), poly(vinylidene difluoride-co-chlorotrifluoroethylene), organosilicon, vinylon, polypropylene, polyethylene, polyvinyl chloride, polystyrene, polyether nitrile, polyurethane, polyphenylene ether, polyester, polysulfone, or a derivative thereof.

In an embodiment of this application, the third metal, the first metal M, and the second metal N for use in the porous substrate each independently include at least one of Cu, Al, Ni, Ti, Ag, Au, Pt, stainless steel, or an alloy thereof.

In an embodiment of this application, a thickness of a layer formed by the first metal M on the surface of the porous substrate is 0.95 $\mu$m to 900 $\mu$m. A thickness of a layer formed by the second metal N on the surface of the porous substrate is 0.95 $\mu$m to 900 $\mu$m.

In an embodiment of this application, a thickness of the bipolar current collector is 2 $\mu$m to 1000 $\mu$m.

In an embodiment of this application, a surface roughness of the bipolar current collector is 0.05 $\mu$m to 10 $\mu$m.

In an embodiment of this application, a thickness ratio between a layer formed by the first metal M on the surface of the porous substrate and a layer formed by the second metal N on the surface of the porous substrate is 0.05 to 20.

In an embodiment of this application, an electron resistivity of the bipolar current collector in a Z direction is $2.00 \times 10^{-10}$ $\Omega \cdot$cm to $2.00 \times 10^{-4}$ $\Omega \cdot$cm.

In an embodiment of this application, the bipolar current collector satisfies at least one of the following features:

(a) A thickness of the bipolar current collector is 5 $\mu$m to 50 $\mu$m;
(b) A surface roughness of the bipolar current collector is 0.2 $\mu$m to 5 $\mu$m;

(c) A thickness ratio between a layer formed by the first metal M on the surface of the porous substrate and a layer formed by the second metal N on the surface of the porous substrate is 0.2 to 5;

(d) An electron resistivity of the bipolar current collector in a Z direction is $2.00 \times 10^{-10}$ $\Omega \cdot$cm to $2.00 \times 10^{-6}$ $\Omega \cdot$cm; and

(e) A porosity of the porous substrate is 40% to 70%.

In an embodiment of this application, the bipolar current collector satisfies at least one of the following features:

(a) A thickness of a layer formed by the first metal M on the surface of the porous substrate is 0.40 $\mu$m to 13.33 $\mu$m; and a thickness of a layer formed by the second metal N on the surface of the porous substrate is 0.40 $\mu$m to 13.33 $\mu$m;

(b) A thickness of the bipolar current collector is 5 $\mu$m to 20 $\mu$m;

(c) A surface roughness of the bipolar current collector is 0.5 $\mu$m to 2 $\mu$m; and

(d) An electron resistivity of the bipolar current collector in a Z direction is $2.00 \times 10^{-10}$ $\Omega \cdot$cm to $2.00 \times 10^{-8}$ $\Omega \cdot$cm.

A second aspect of this application provides an electrochemical device, including at least two electrode assemblies and the bipolar current collector according to any one of the embodiments described above. The bipolar current collector is located between the two electrode assemblies. A third aspect of the present invention provides an electronic device. The electronic device includes the electrochemical device according to the second aspect described above.

This application provides a bipolar current collector. The bipolar current collector includes a porous substrate, a first metal, and a second metal. The first metal exists on one surface of the porous substrate. The second metal exists on another surface of the porous substrate. At least one of the first metal or the second metal exists inside the porous substrate. The porous material possesses advantages of oxidation resistance, reduction resistance, ion insulation, and some mechanical strength. A metal layer of the bipolar current collector possesses advantages of high electron conductivity and ion insulativity, high mechanical strength, and high thermal stability. In addition, both surfaces of the bipolar current collector are rough to some extent, thereby optimizing interfacial bonding of a positive film and a negative film on both sides to a composite bipolar current collector, and increasing the bonding force of the films. Two sides of the bipolar current collector according to this application may be coated with a positive active material and a negative active material respectively to combine with an adjacent electrode assembly to form an electrochemical cell, thereby increasing the energy density and output voltage of the electrochemical device.

## BRIEF DESCRIPTION OF DRAWINGS

To describe the technical solutions in this application or the prior art more clearly, the following outlines the drawings to be used in some embodiments of this application or the prior art. Evidently, the drawings outlined below are merely about some embodiments of this application, and a person of ordinary skill in the art may derive other technical solutions from the drawings without making any creative effort.

FIG. 1 is a schematic diagram of a current collector according to an embodiment of this application;

FIG. 2 is a schematic diagram of an electrochemical device according to an embodiment of this application; and

FIG. 3 is a schematic flowchart of preparing a composite current collector according to an embodiment of this application.

## DETAILED DESCRIPTION OF EMBODIMENTS

To make the objectives, technical solutions, and advantages of this application clearer, the following describes this application in more detail with reference to drawings and embodiments.

Evidently, the described embodiments are merely a part of but not all of the embodiments of this application. All other embodiments derived by a person of ordinary skill in the art based on the embodiments of this application without making any creative efforts fall within the protection scope of this application.

As a new type of lithium-ion battery, a bipolar lithium-ion battery forms a stand-alone lithium-ion battery by internal series connection of a plurality of battery cells, thereby increasing the output voltage of the lithium-ion battery. The current collector used in such a lithium-ion battery is a bipolar current collector. One side of the bipolar current collector contacts a positive active material, and the other side contacts a negative active material. This requires the current collector to be resistant to oxidation and reduction. Therefore, a bipolar current collector is usually a metal foil such as aluminum-copper composite foil. However, the existing bipolar lithium-ion battery typically encounters the following problems: On the one hand, due to poor intermetallic interfacial bonding, the aluminum-copper composite foil is not conducive to the cycling stability of the bipolar lithium-ion battery. On the other hand, the metal foil is expensive, and increases the manufacturing cost of the bipolar lithium-ion battery.

In addition, the existing bipolar current collector may be a multi-layer metallic composite current collector, which is usually formed by directly compounding a copper foil and an aluminum foil. Such a current collector is resistant to oxidation and reduction to some extent, but incurs problems such as poor intermetallic interfacial bonding and difficulty of thinning.

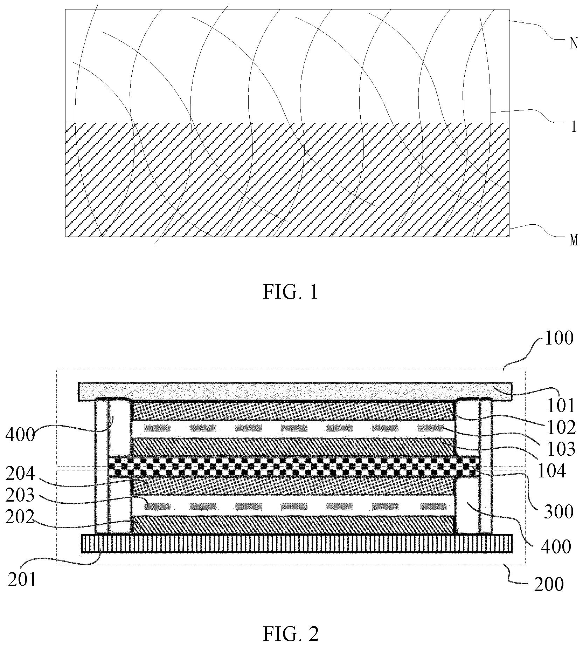

In view of the problems above, as shown in FIG. 1, this application provides a bipolar current collector, including a porous substrate 1, a first metal M, and a second metal N. The first metal M exists on one surface of the porous substrate. The second metal N exists on another surface of the porous substrate. At least one of the first metal M or the second metal N exists inside the porous substrate. A material of the porous substrate includes at least one of a carbon material, a polymer material, or a third metal. A porosity of the porous substrate is 20% to 90%, and preferably 40% to 70%.

The porous substrate material possesses advantages of high oxidation resistance, high reduction resistance, and high ion insulation, high mechanical strength, low thickness, and high thermal stability. When the thermal stability is higher than 300 °C, a metal layer may be prepared on a surface of the bipolar current collector by PVD (Physical Vapor Deposition, physical vapor deposition). Because the porous substrate material is porous, a metal material may penetrate into the porous substrate material and contact a metal material deposited on the other side to provide electron conductivity. The surface of the metal layer formed by the PVD on both sides of the bipolar current collector is rough to some extent, thereby strengthening the interfacial bonding of the bipolar current collector to a positive active material and a negative active material that are applied onto two surfaces of the bipolar current collector respectively, and increasing the bonding force of the bipolar current collector to the positive and negative films. In this application, the porous substrate may be mesh-shaped.

In this application, the first metal and the second metal may be located on both surfaces of the porous substrate, or may permeate into pores of the porous substrate. In addition, the first metal and the second metal may contact each other after permeating.

The first metal and the second metal possess the advantages of high oxidation resistance, high reduction resistance, and high ion insulation, high mechanical strength, high thermal stability, and low thickness. Because the first metal and the second metal need to contact the positive active material and the negative active material respectively, the first metal and the second metal are required to be compatible with the positive active material and the negative active material respectively.

The thickness of the bipolar current collector according to this application is less than or equal to that of an existing copper-aluminum-foil current collector material, and is mass manufacturable industrially. Compared with the existing mature stainless steel foil and Ti foil, the copper-aluminum foil possesses the advantage of cost-effectiveness. Compared with the low-cost conductive material or polymer composite, the copper-aluminum foil possesses the advantages of high electron conductivity, high rate performance, and low thickness.

In an embodiment of this application, the carbon material includes at least one of a single-walled carbon nanotube film, a multi-walled carbon nanotube film, a carbon felt, a porous carbon film, carbon black, acetylene black, fullerene, conductive graphite, or graphene.

In an embodiment of this application, the polymer material includes at least one of polyethylene terephthalate, polybutylene terephthalate, polyethylene naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-co-hexafluoropropylene), poly(vinylidene difluoride-co-chlorotrifluoroethylene), organosilicon, vinylon, polypropylene, polyethylene, polyvinyl chloride, polystyrene, polyether nitrile, polyurethane, polyphenylene ether, polyester, polysulfone, or a derivative thereof.

When the substrate of the bipolar current collector is a polymer material, the density of the polymer material is lower than that of a commonly used metallic current collector material, thereby reducing a weight of non-active materials and increasing a mass energy density of a battery cell.

In an embodiment of this application, the third metal, the first metal M, and the second metal N each independently include at least one of Cu, Al, Ni, Ti, Ag, Au, Pt, stainless steel, or an alloy thereof.

The first metal M and the second metal N may be the same or different, but need to be compatible with the positive active material or negative active material applied onto the surface of the metal, and need to be resistant to oxidation or reduction correspondingly.

In an embodiment of this application, a thickness of a layer formed by the first metal M on the surface of the porous substrate is 0.95 $\mu$m to 900 $\mu$m, and preferably 0.40 $\mu$m to 13.33 $\mu$m. A thickness of a layer formed by the second metal N on the surface of the porous substrate is 0.95 $\mu$m to 900 $\mu$m, and preferably 0.40 $\mu$m to 13.33 $\mu$m.

In an embodiment of this application, a thickness of the bipolar current collector is 2 $\mu$m to 1000 $\mu$m, preferably 5 $\mu$m to 50 $\mu$m, and more preferably 5 $\mu$m to 20 $\mu$m. If the thickness of the bipolar current collector is excessive, the percentage of non-active materials in the electrochemical device increases, and the energy density decreases. If the thickness is deficient, the mechanical strength is insufficient, and the bipolar current collector is prone to be damaged.

In an embodiment of this application, a surface roughness of the bipolar current collector is 0.05 $\mu$m to 10 $\mu$m,

preferably 0.2 $\mu$m to 5 $\mu$m, and more preferably 0.5 $\mu$m to 2 $\mu$m. When the surface roughness of the bipolar current collector is deficient, the bonding force of the bipolar current collector to an electrode active material applied onto the surface of the bipolar current collector is insufficient. When the surface roughness of the bipolar current collector is excessive, the high surface roughness does not further improve the bonding effect, but may cause a weight distribution of active materials to fluctuate, and increase the risk of lithium plating at local regions.

In an embodiment of this application, a thickness ratio between a layer formed by the first metal M on the surface of the porous substrate and a layer formed by the second metal N on the surface of the porous substrate is 0.05 to 20, and preferably 0.2 to 5. The thickness ratio varies with the material types of M and N selected. Generally, the metal layer with a low density, a low cost, and high preparation efficiency is thicker, and the metal layer with a high density, a high cost, and low preparation efficiency is thinner, thereby increasing the ED (Energy Density, energy density) and reducing the cost.

In an embodiment of this application, an electron resistivity of the bipolar current collector in a Z direction is $2.00 \times 10^{-10}$ $\Omega \cdot$cm to $2.00 \times 10^{-4}$ $\Omega \cdot$cm, preferably $2.00 \times 10^{-10}$ $\Omega \cdot$cm to $2.00 \times 10^{-6}$ $\Omega \cdot$cm, and more preferably $2.00 \times 10^{-10}$ $\Omega \cdot$cm to $2.00 \times 10^{-8}$ $\Omega \cdot$cm. The Z direction means a thickness direction of the bipolar current collector, that is, a direction in which the dimension of the bipolar current collector is the smallest. In this application, the electron resistivity of the bipolar current collector in the Z direction is expected to be relatively low, so as to provide high electron conductivity.

This application further provides an electrochemical device, including at least one bipolar current collector according to this application. The bipolar current collector is hermetically connected to an outer package of the electrochemical device to form two independent hermetic chambers at two sides of the bipolar current collector. Each hermetic chamber contains one electrode assembly and an electrolytic solution to form an independent electrochemical cell. The two sides of the bipolar current collector are coated with electrode active materials of opposite polarities respectively. Internal series connection may be implemented between adjacent electrochemical cells through a bipolar electrode containing the bipolar current collector according to this application, so as to form a bipolar lithium-ion battery to achieve a higher working voltage.

In an embodiment of this application, one tab may be led out of each of two adjacent electrode assemblies. The tabs of the two electrode assemblies are of opposite polarities. For example, when the bipolar current collector is coated with a positive active material on a side adjacent to an electrode assembly A and is coated with a negative active material on a side adjacent to an electrode assembly B, a negative tab is led out of the electrode assembly A, and a positive tab is led out of the electrode assembly B. In this case, an output voltage between the two tabs is a sum of the output voltages of the two electrochemical cells.

In an embodiment of this application, two tabs may be led out of each of two adjacent electrode assemblies. For example, when the bipolar current collector is coated with a positive active material on the side adjacent to the electrode assembly A and is coated with a negative active material on the side adjacent to the electrode assembly B, the positive tab of the electrode assembly A is connected in series to the positive tab of the electrode assembly B. The negative tab of the electrode assembly A and the positive tab of the electrode assembly B are output tabs. The output voltage is a sum of the output voltages of the two electrochemical cells. In this case, both an internal series connection implemented through the bipolar current collector and an external series connection implemented through the tabs exist between the two adjacent electrochemical cells concurrently.

In an embodiment of this application, one tab may be led out of the bipolar current collector to monitor the working status of the lithium-ion battery.

In an embodiment of this application, the electrochemical device according to this application includes at least one bipolar current collector. The bipolar current collector is hermetically connected to the outer package to form an independent hermetic chamber on each of two sides of the bipolar current collector. Each hermetic chamber contains an electrode assembly and an electrolytic solution to form an electrochemical cell. One side of the bipolar current collector is coated with an electrode active material, and the other side is in direct contact with and electrically connected to the current collector of the electrode assembly. For example, the side that is of the bipolar current collector and close to the electrode assembly A is coated with a positive active material, and the side close to the electrode assembly B is in direct contact with and electrically connected to the negative current collector of the electrode assembly B. In this case, one negative tab may be led out of the electrode assembly A, and one positive tab may be led out of the electrode assembly B. The two electrochemical cells are internally connected in series to each other by the bipolar current collector. Alternatively, two tabs are led out of the electrode assembly A and out of the electrode assembly B separately. The positive tab of the electrode assembly A is connected in series to the negative tab of the electrode assembly B. In this case, the two electrochemical cells are internally connected in series to each other by the bipolar current collector and externally connected in series by the tabs. In addition, one tab may be led out of the bipolar current collector to monitor the working status of the battery.

In an embodiment of this application, the electrochemical device according to this application includes at least one bipolar current collector. The bipolar current collector is hermetically connected to the outer package to form an independent hermetic chamber on each of two sides of the bipolar current collector. Each hermetic chamber contains an electrode assembly and an electrolytic solution to form an electrochemical cell. One side of the bipolar current collector is coated with an electrode active material, and the other side contacts a separator of the electrode assembly to form electrical insulation. For example, the bipolar current collector is coated with a positive active material on a side close to the electrode assembly A, and a side close to the electrode assembly B is in contact with the separator of the electrode assembly B to form electrical insulation from the electrode assembly B. In this case, two tabs are led out of each of the two electrode assemblies. One tab is led out of the bipolar current collector, and is connected in parallel to the positive tab of the electrode assembly A, and then connected in series to the negative tab of the electrode assembly B.

In an embodiment of this application, the electrochemical device according to this application includes at least one bipolar current collector. The bipolar current collector is hermetically connected to the outer package to form an independent hermetic chamber on each of two sides of the bipolar current collector. Each hermetic chamber contains an electrode assembly and an electrolytic solution to form an electrochemical cell. The two sides of the bipolar current collector are in direct contact with the separator of an adjacent electrode assembly to form electrical insulation. In this case, two tabs are led out of each of the two electrode assemblies, and the two electrode assemblies are connected in series to each other by the tabs.

In an embodiment of this application, an undercoat may be included between the bipolar current collector and the electrode active material. The undercoat serves to improve the performance of bonding between the bipolar current collector and the active material, and improve the electron conductivity between the bipolar current collector and the active material. The undercoat is usually formed by coating the bipolar current collector with a slurry and then drying the slurry, where the slurry is formed by mixing conductive carbon black and styrene butadiene rubber in deionized water. In addition, the undercoats on the two sides of the bipolar current collector may be the same or different. The processes of preparing a positive active material layer, a negative active material layer, a positive undercoat, and a negative undercoat will be described herein later.

FIG. 2 is a schematic diagram of an electrochemical device according to an embodiment of this application. As shown in FIG. 2, a bipolar current collector 300 partitions the electrochemical device into two electrode assemblies: a first electrode assembly 100 and a second electrode assembly 200. The first electrode assembly 100 includes a negative electrode 101, a first negative active material layer 102, a first separator 103, a first positive active material layer 104, and a part of the bipolar current collector 300, which are arranged in sequence from top downward, as shown in FIG. 2. The second electrode assembly 200 includes a positive electrode 201, a second positive active material layer 202, a second separator 203, a second negative active material layer 204, and another part of the bipolar current collector 300, which are arranged in sequence from bottom upward, as shown in FIG. 2. Further, the electrochemical device may be sealed by a sealing element 400, so that the electrochemical device forms two independent cavity structures. The two cavities correspond to the first electrode assembly 100 and the second electrode assembly 200 respectively.

This application further provides an electronic device. The electronic device includes the electrochemical device according to any one of the foregoing embodiments.

The electrode assembly is not particularly limited in this application and may be any electrode assembly in the prior art as long as the objectives of this application can be achieved. For example, the electrode assembly is a stacked electrode assembly or a jelly-roll electrode assembly. The electrode assembly generally includes a positive electrode plate, a negative electrode plate, and a separator.

The negative electrode plate is not particularly limited in this application as long as the objectives of this application can be achieved. For example, the negative electrode plate generally includes a negative current collector and a negative active material layer. The negative current collector is not particularly limited, and may be any negative current collector known in the art, for example, a copper foil, an aluminum foil, an aluminum alloy foil, or a composite current collector. The negative active material layer includes a negative active material. The negative active material is not particularly limited, and may be any negative active material known in the art. For example, the negative active material layer may include at least one of artificial graphite, natural graphite, mesocarbon microbead, soft carbon, hard carbon, silicon, silicon carbon, lithium titanate, or the like.

The positive electrode plate is not particularly limited in this application as long as the objectives of this application can be achieved. For example, the positive electrode plate generally includes a positive current collector and a positive active material. The positive current collector is not particularly limited, and may be any positive current collector well known in the art. For example, the positive current collector may be an aluminum foil, an aluminum alloy foil, or a composite current collector. The positive active material is not particularly limited, and may be any positive active material in the prior art. The active material includes at least one of NCM811, NCM622, NCM523, NCM111, NCA, lithium iron phosphate, lithium cobaltate, lithium manganate, lithium manganese iron phosphate, or lithium titanate.

The electrolytic solution is not particularly limited in this application, and may be any electrolytic well known in the art. For example, the electrolytic solution may be in a gel state, a solid state, or a liquid state. For example, the liquid-state electrolytic solution may include a lithium salt and a nonaqueous solvent.

The lithium salt is not particularly limited, and may be any lithium salt well known in the art as long as the objectives of this application can be achieved. For example, the lithium salt includes at least one of lithium hexafluoro-

phosphate (LiPF$_6$), lithium tetrafluoroborate (LiBF$_4$), lithium difluorophosphate (LiPO$_2$F$_2$), lithium bistrifluoromethanesulfonimide LiN(CF$_3$SO$_2$)$_2$ (LiTFSI), lithium bis(fluorosulfonyl)imide Li(N(SO$_2$F)$_2$) (LiFSI), lithium bis(oxalate) borate LiB(C$_2$O$_4$)$_2$ (LiBOB), or lithium difluoro(oxalate)borate LiBF$_2$(C$_2$O$_4$) (LiDFOB). For example, the lithium salt may be LiPF$_6$.

The nonaqueous solvent is not particularly limited as long as the objectives of this application can be achieved. For example, the nonaqueous solvent may include at least one of a carbonate compound, a carboxylate compound, an ether compound, a nitrile compound, or another organic solvent.

For example, the carbonate compound may include at least one of diethyl carbonate (DEC), dimethyl carbonate (DMC), ethyl methyl carbonate (EMC), dipropyl carbonate (DPC), methyl propyl carbonate (MPC), ethylene propyl carbonate (EPC), ethylene carbonate (EC), propylene carbonate (PC), butylene carbonate (BC), vinyl ethylene carbonate (VEC), fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate.

The separator is not particularly limited in this application, and may be a polymer or inorganic compound or the like formed from a material that is stable to the electrolytic solution in this application. Generally, the separator is ion-conductive and electronically insulative.

For example, the separator may include a substrate layer and a surface treatment layer. The substrate layer may be fabric, film or composite film, which, in each case, is porous. The material of the substrate layer may be at least one selected from polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer formed by mixing a polymer and an inorganic compound.

For example, the inorganic compound layer includes inorganic particles and a binder. The inorganic particles are not particularly limited, and may be at least one selected from: aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, and barium sulfate. The binder is not particularly limited, and may be one or more selected from polyvinylidene fluoride, vinylidene fluoride-hexafluoropropylene copolymer, polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer. The material of the polymer includes at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-co-hexafluoropropylene).

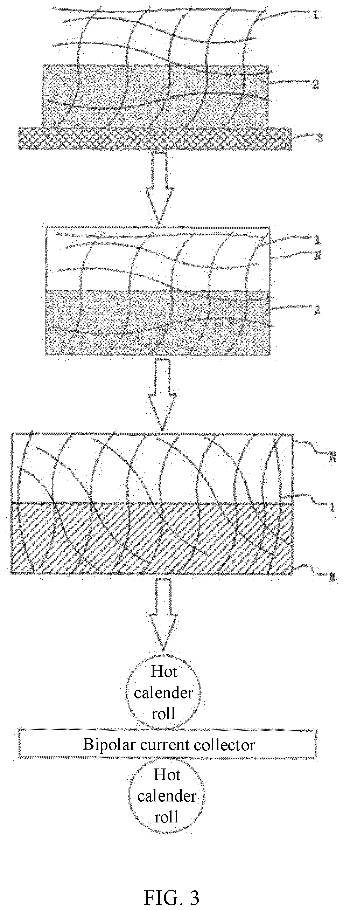

As shown in FIG. 3, this application further provides a method for preparing the composite bipolar current collector according to any one of the embodiments described above. The method includes the following steps:

1) Preparing a layer of polymer material particle coating 2 on a surface of a stainless steel base plate 3 by electrostatic spraying;
2) Performing high-temperature heat treatment so that the polymer material particle coating 2 reaches a softening temperature;
3) Affixing a side A of a heat-resistant porous mesh substrate 1 to a surface of the polymer material coating;
4) Performing hot calendering to ensure effective and consistent bonding between the heat-resistant porous mesh substrate and the polymer material coating;
5) Cooling down to a room temperature, and then scraping off a composite film from the stainless steel base plate by using a scraper, where the composite film is compounded of the heat-resistant porous mesh substrate and the polymer coating;
6) Preparing, by a PVD method, a second metal N of a given thickness on a side B of the composite film compounded of the heat-resistant porous mesh substrate and the polymer coating;
7) Dissolving the polymer coating on the side A by using an organic solvent, and cleaning the side A to fully expose the heat-resistant porous mesh substrate on the side A;
8) Preparing a first metal M of a given thickness on the side A of the porous mesh substrate by the PVD method;
9) Performing hot calendering to ensure that the side A and the side B closely fit the metal M and the metal N on the two sides; and
10) Performing rewinding.

A person skilled in the art understands that the bipolar current collector according to this application may be prepared by any other method, without being limited to the method exemplified above. For example, the PVD method may be a CVD (Chemical Vapor Deposition, chemical vapor deposition) method, an electroplating method or another method.

PVD (Physical Vapor Deposition, physical vapor deposition) is a process of evaporating a target through gas discharge by use of a low-voltage high-current arc discharge technology under a vacuum condition, and ionizing both the evaporated material and gas, so that the evaporated material and a resulting reaction product are deposited on a workpiece as accelerated by an electrical field. Compared with a CVD process, the PVD process is characterized by a low processing temperature and characterized that an internal stress state of a thin film is a compressive stress. The PVD process brings no adverse impact on the environment, and comes into line with the modern trend of green manufacturing.

It is hereby noted that in specific embodiments of this application, the electrochemical device is implemented by using a lithium-ion battery as an example, but the electrochemical device is not limited to lithium-ion batteries.

The implementations of this application are described below in more detail with reference to embodiments and comparative embodiments. Various tests and evaluations are performed by the following methods. In addition, unless otherwise specified, "fraction" and "%" mean a percent by weight.

**Embodiment 1**

**<Preparing a bipolar electrode plate>**

**<Preparing a bipolar current collector>**

1) Preparing a layer of polyvinylidene difluoride (PVDF) particle coating on a surface of a stainless steel base plate by electrostatic spraying, where the thickness of the coating is 45 $\mu$m;

2) Performing heat treatment at 180 °C so that the PVDF layer reaches a softening temperature;

3) Affixing a side A of a 140-$\mu$m-thick polyimide (PI) porous film to a surface of the PVDF coating, where a porosity of the polyimide porous film is 60%;

4) Performing hot calendering at a temperature of 180 °C to ensure effective and consistent bonding between the PI porous film and the PVDF coating;

5) Cooling down to a room temperature, and then scraping off a composite film from the stainless steel base plate by using a scraper, where the composite film is compounded of the PI porous film and the PVDF coating;

6) Preparing, by a PVD method, an aluminum layer on a side B of the composite film compounded of the PI porous film and the PVDF coating, where a thickness (L2') of the aluminum layer is 95 $\mu$m;

7) Dissolving the PVDF on the side A by using a DMF (N,N-dimethylformamide) solvent, and cleaning the side A to fully expose the PI porous film substrate on the side A;

8) Preparing a copper layer on a side A of the PI porous film by a PVD method, where a thickness (L1') of the copper layer is 45 $\mu$m;

9) Performing hot calendering at a temperature of 200 °C to make the side A and the side B closely fit the aluminum layer and the copper layer on the two sides, and calendering the composite current collector until a total thickness is as thin as 100 $\mu$m, of which the aluminum layer is approximately 66.66 $\mu$m thick, and the copper layer is approximately 33.33 $\mu$m thick; and

10) Performing rewinding.

**<Preparing a negative active material layer in a bipolar electrode plate>**

Mixing graphite as a negative active material, conductive carbon black (Super P), and styrene butadiene rubber (SBR) at a mass ratio of 96: 1.5: 2.5, adding deionized water as a solvent, blending the mixture to form a slurry with a solid content of 70%, and stirring well. Coating one surface of the bipolar current collector with the slurry evenly, and drying the current collector at 110 °C to obtain a negative active material layer that is 130 $\mu$m in thickness.

**<Preparing a positive active material layer in a bipolar electrode plate>**

Mixing lithium cobalt oxide ($LiCoO_2$) as a positive active material, conductive carbon black, and PVDF at a mass ratio of 97.5: 1.0: 1.5, adding N-methyl-pyrrolidone (NMP) as a solvent, blending the mixture to form a slurry with a solid content of 75%, and stirring well. Coating the other surface of the bipolar current collector with the slurry evenly, and drying the current collector at 90 °C to obtain a positive active material layer that is 110 $\mu$m in thickness.

Upon completion of the foregoing steps, a bipolar electrode plate is obtained. Cutting the electrode plate into a size of 41 mm × 61 mm for future use.

**<Preparing a negative electrode plate>**

Mixing graphite as a negative active material, conductive carbon black, and the styrene butadiene rubber at a mass ratio of 96: 1.5: 2.5, adding deionized water as a solvent, blending the mixture to form a slurry with a solid content of 70%, and stirring well. Coating one surface of a 10-$\mu$m-thick copper foil with the slurry evenly, and drying the slurry at a temperature of 110 °C to obtain a negative electrode plate coated with a 150-$\mu$m-thick negative active material layer on a single side, and then repeating the foregoing coating steps on the other side of the negative electrode plate. Cutting the electrode plate into a size of 41 mm × 61 mm after completion of the coating, and welding tabs so that the electrode plate is ready for future use.

**<Preparing a positive electrode plate>**

Mixing LiCoO$_2$ as a positive active material, conductive carbon black, and PVDF at a mass ratio of 97.5: 1.0: 1.5, adding NMP as a solvent, blending the mixture to form a slurry with a solid content of 75%, and stirring well. Coating one surface of a 12-$\mu$m-thick aluminum foil with the slurry evenly, and drying the slurry at a temperature of 90 °C to obtain a positive electrode plate coated with a 100-$\mu$m-thick positive active material layer on a single side. Next, repeating the foregoing steps on the other side of the positive electrode plate. Cutting the electrode plate into a size of 38 mm × 58 mm after completion of the coating, and welding tabs so that the electrode plate is ready for future use.

**<Preparing an electrolytic solution>**

Mixing ethylene carbonate (EC), ethyl methyl carbonate (EMC), and diethyl carbonate (DEC) as an organic solvent at a mass ratio of EC: EMC: DEC = 30: 50: 20 in an dry argon atmosphere first, adding lithium hexafluorophosphate (LiPF$_6$) into the organic solvent for dissolving, and mixing well to obtain an electrolytic solution in which a lithium salt concentration is 1.15 mol/L.

**<Preparing an electrode assembly>**

Using a 15-$\mu$m-thick polyethylene (PE) film as a separator. Placing a positive electrode plate on each of two sides of the negative electrode plate, and placing a layer of separator between the positive electrode plate and the negative electrode plate to form a stacked structure. Fixing four corners of the entire stacked structure properly to obtain an electrode assembly A.
Using a 15-$\mu$m-thick polyethylene (PE) film as a separator. Placing a negative electrode plate on each of two sides of the positive electrode plate, and placing a layer of separator between the positive electrode plate and the negative electrode plate to form a stacked structure. Fixing four corners of the entire stacked structure properly to obtain an electrode assembly B.

**<Preparing a bipolar lithium-ion battery>**

**<Preparing a bipolar electrode assembly>**

Placing a 90-$\mu$m-thick punch-molded packaging film (aluminum plastic film) into an assembly jig, with a pit side facing upward, and then placing the electrode assembly A into the pit so that the positive electrode plate of the electrode assembly A faces upward. Next, placing the double-side-coated bipolar electrode plate onto the electrode assembly A, with the negative coating facing downward so that the positive electrode plate of the electrode assembly A corresponds to the negative active material coating region of the bipolar electrode plate. Pressing tightly with an external force.
Putting the assembled semi-finished product into another assembly jig, with the bipolar electrode plate facing upward. Putting the electrode assembly B onto the bipolar current collector so that the negative electrode of the electrode assembly B corresponds to the positive active material layer of the bipolar electrode plate. Subsequently, using another punch-molded 90-$\mu$m-thick aluminum plastic film to overlay the electrode assembly B, with the pit side facing downward. Heat-sealing the two aluminum plastic films by hot pressing so that the electrode assembly A is separated from the electrode assembly B by the bipolar electrode plate, so as to obtain a bipolar electrode assembly. The bipolar electrode assembly contains two independent cavities. The electrode assembly A corresponds to a first cavity, and the electrode assembly B corresponds to a second cavity.

**<Injecting an electrolytic solution and sealing the electrode assembly>**

Injecting an electrolytic solution into the two cavities of the bipolar electrode assembly separately, and then sealing the electrode assembly. Leading out one tab from each electrode assembly. Performing internal series connection and conduction between the electrode assembly in the first cavity and the electrode assembly in the second cavity through the bipolar current collector to obtain a bipolar lithium-ion battery. No ions are exchanged between the two cavities of the bipolar lithium-ion battery.

**Embodiment 2**

Identical to Embodiment 1 except the following steps in <Preparing a bipolar current collector>:

**<Preparing a bipolar current collector>**

1) Preparing a layer of polyvinylidene difluoride (PVDF) particle coating on a surface of a stainless steel base plate by electrostatic spraying, where the thickness of the coating is 9 $\mu$m;
2) Performing heat treatment at 180 °C so that the PVDF layer reaches a softening temperature;
3) Affixing a side A of a 28-$\mu$m-thick polyimide (PI) porous film to a surface of the PVDF coating, where a porosity of the polyimide porous film is 60%;
4) Performing hot calendering at a temperature of 180 °C to ensure effective and consistent bonding between the PI porous film and the PVDF coating;
5) Cooling down to a room temperature, and then scraping off a composite film from the stainless steel base plate by using a scraper, where the composite film is compounded of the PI porous film and the PVDF coating;
6) Preparing, by a PVD method, an aluminum layer on a side B of the composite film compounded of the PI porous film and the PVDF coating, where a thickness of the aluminum layer is 19 $\mu$m;
7) Dissolving the PVDF on the side A by using a DMF (N,N-dimethylformamide) solvent, and cleaning the side A to fully expose the PI porous film substrate on the side A;
8) Preparing a copper layer on a side A of the PI porous film by a PVD method, where a thickness of the copper layer is 9.00 $\mu$m;
9) Performing hot calendering at a temperature of 200 °C to make the side A and the side B closely fit the aluminum layer and the copper layer on the two sides, and calendering the composite current collector until a total thickness is as thin as 20 $\mu$m, of which the aluminum layer is approximately 13.33 $\mu$m thick, and the copper layer is approximately 6.67 $\mu$m thick; and
10) Performing rewinding.

**Embodiment 3**

Identical to Embodiment 2 except that, in <Preparing a bipolar current collector>, the hot calendering temperature in step 9) is adjusted to 220 °C so that the surface roughness of the bipolar current collector is 0.2 $\mu$m.

**Embodiment 4**

Identical to Embodiment 2 except that, in <Preparing a bipolar current collector>, the hot calendering temperature in step 9) is adjusted to 230 °C so that the surface roughness of the bipolar current collector is 0.05 $\mu$m.

**Embodiment 5**

Identical to Embodiment 2 except that, in <Preparing a bipolar current collector>, an aluminum layer of 26.67 $\mu$m in thickness and a copper layer of 1.33 $\mu$m in thickness are prepared by the PVD method so that the thickness of the aluminum layer is 19.05 $\mu$m after the hot calendering; and the thickness of the copper layer is changed to 0.95 $\mu$m.

**Embodiment 6**

Identical to Embodiment 2 except that, in <Preparing a bipolar current collector>, an aluminum layer of 5.60 $\mu$m in thickness and a copper layer of 22.40 $\mu$m in thickness are prepared by the PVD method so that the thickness of the aluminum layer is 4.00 $\mu$m after the hot calendering; and the thickness of the copper layer is changed to 16.00 $\mu$m.

**Embodiment 7**

Identical to Embodiment 2 except that, in <Preparing a bipolar current collector>, an aluminum layer of 1.33 $\mu$m in thickness and a copper layer of 26.67 $\mu$m in thickness are prepared by the PVD method so that the thickness of the aluminum layer is 0.95 $\mu$m after the hot calendering; and the thickness of the copper layer is changed to 19.05 $\mu$m.

**Embodiment 8**

Identical to Embodiment 5 except that, in <Preparing a bipolar current collector>, a Ti layer is prepared on the side B, a Ti layer is also prepared on the side A, and the porosity of the PI porous film is 20%.

**Embodiment 9**

Identical to Embodiment 6 except that, in <Preparing a bipolar current collector>, the porosity of the PI porous film is 40%, and the electron resistivity in the Z direction is adjusted to $2.00\times10^{-7}$ $\Omega$·cm.

**Embodiment 10**

Identical to Embodiment 2 except that, in <Preparing a bipolar current collector>, the PI porous film is replaced with a Ni porous substrate, and the porosity of the Ni porous substrate is 90%; step 6) is changed to: preparing, by a PVD method, an silver layer on a side B of the composite film compounded of the Ni porous substrate and the PVDF coating, where a thickness of the silver layer is 14.00 $\mu$m; and
step 8) is changed to: preparing a silver layer on a side A of the Ni porous substrate by the PVD method, where a thickness of the silver layer is 14.00 $\mu$m.

**Embodiment 11**

Identical to Embodiment 6 except that, in <Preparing a bipolar current collector>, the PI porous film is replaced with a carbon felt porous substrate.

**Embodiment 12**

Identical to Embodiment 6 except that, in <Preparing a bipolar current collector>, the PI porous film is replaced with a polyethylene terephthalate (PET) porous substrate.

**Embodiment 13**

Identical to Embodiment 6 except that, in <Preparing a bipolar current collector>, the PI porous film is replaced with a stainless steel porous substrate.

**Embodiment 14**

Identical to Embodiment 6 except that, in <Preparing a bipolar current collector>, a nickel layer is prepared on the side A.

**Embodiment 15**

Identical to Embodiment 6 except that, in <Preparing a bipolar current collector>, a titanium layer is prepared on the side A.

**Embodiment 16**

Identical to Embodiment 6 except that, in <Preparing a bipolar current collector>, a nickel layer is prepared on the side B.

**Embodiment 17**

Identical to Embodiment 6 except that, in <Preparing a bipolar current collector>, a titanium layer is prepared on the side B.

**Embodiment 18**

Identical to Embodiment 1 except the following steps in <Preparing a bipolar current collector>:

**<Preparing a bipolar current collector>**

1) Preparing a layer of polyvinylidene difluoride (PVDF) particle coating on a surface of a stainless steel base plate by electrostatic spraying, where the thickness of the coating is 450 $\mu$m;
2) Performing heat treatment at 180 °C so that the PVDF layer reaches a softening temperature;
3) Affixing a side A of a 1400-$\mu$m-thick polyimide (PI) porous film to a surface of the PVDF coating, where a porosity of the polyimide porous film is 60%;
4) Performing hot calendering at a temperature of 180 °C to ensure effective and consistent bonding between the PI porous film and the PVDF coating;
5) Cooling down to a room temperature, and then scraping off a composite film from the stainless steel base plate by using a scraper, where the composite film is compounded of the PI porous film and the PVDF coating;
6) Preparing, by a PVD method, an aluminum layer on a side B of the composite film compounded of the PI porous film and the PVDF coating, where a thickness of the aluminum layer is 280 $\mu$m;
7) Dissolving the PVDF on the side A by using a DMF (N,N-dimethylformamide) solvent, and cleaning the side A to fully expose the PI porous film substrate on the side A;
8) Preparing a copper layer on a side A of the PI porous film by a PVD method, where a thickness of the copper layer is 1120 $\mu$m;
9) Performing hot calendering at a temperature of 200 °C to make the side A and the side B closely fit the aluminum layer and the copper layer on the two sides, and calendering the composite current collector until a total thickness is as thin as 1000 $\mu$m, of which the aluminum layer is approximately 200.00 $\mu$m thick, and the copper layer is approximately 800.00 $\mu$m thick; and
10) Performing rewinding.

**Embodiment 19**

Identical to Embodiment 1 except the following steps in <Preparing a bipolar current collector>:

**<Preparing a bipolar current collector>**

1) Preparing a layer of polyvinylidene difluoride (PVDF) particle coating on a surface of a stainless steel base plate by electrostatic spraying, where the thickness of the coating is 4.5 $\mu$m;
2) Performing heat treatment at 180 °C so that the PVDF layer reaches a softening temperature;
3) Affixing a side A of a 14-$\mu$m-thick polyimide (PI) porous film to a surface of the PVDF coating, where a porosity of the polyimide porous film is 60%;
4) Performing hot calendering at a temperature of 180 °C to ensure effective and consistent bonding between the PI porous film and the PVDF coating;
5) Cooling down to a room temperature, and then scraping off a composite film from the stainless steel base plate by using a scraper, where the composite film is compounded of the PI porous film and the PVDF coating;
6) Preparing, by a PVD method, an aluminum layer on a side B of the composite film compounded of the PI porous film and the PVDF coating, where a thickness of the aluminum layer is 2.80 $\mu$m;
7) Dissolving the PVDF on the side A by using a DMF (N,N-dimethylformamide) solvent, and cleaning the side A to fully expose the PI porous film substrate on the side A;
8) Preparing a copper layer on a side A of the PI porous film by a PVD method, where a thickness of the copper layer is 11.20 $\mu$m;
9) Performing hot calendering at a temperature of 200 °C to make the side A and the side B closely fit the aluminum layer and the copper layer on the two sides, and calendering the composite current collector until a total thickness is as thin as 10 $\mu$m, of which the aluminum layer is approximately 2.00 $\mu$m thick, and the copper layer is approximately 8.00 $\mu$m thick; and

10) Performing rewinding.

**Embodiment 20**

Identical to Embodiment 1 except the following steps in <Preparing a bipolar current collector>:

**<Preparing a bipolar current collector>**

1) Preparing a layer of polyvinylidene difluoride (PVDF) particle coating on a surface of a stainless steel base plate by electrostatic spraying, where the thickness of the coating is 0.9 $\mu$m;
2) Performing heat treatment at 180 °C so that the PVDF layer reaches a softening temperature;
3) Affixing a side A of a 0.28-$\mu$m-thick polyimide (PI) porous film to a surface of the PVDF coating, where a porosity of the polyimide porous film is 60%;
4) Performing hot calendering at a temperature of 180 °C to ensure effective and consistent bonding between the PI porous film and the PVDF coating;
5) Cooling down to a room temperature, and then scraping off a composite film from the stainless steel base plate by using a scraper, where the composite film is compounded of the PI porous film and the PVDF coating;
6) Preparing, by a PVD method, an aluminum layer on a side B of the composite film compounded of the PI porous film and the PVDF coating, where a thickness of the aluminum layer is 0.56 $\mu$m;
7) Dissolving the PVDF on the side A by using a DMF (N,N-dimethylformamide) solvent, and cleaning the side A to fully expose the PI porous film substrate on the side A;
8) Preparing a copper layer on a side A of the PI porous film by a PVD method, where a thickness of the copper layer is 2.24 $\mu$m;
9) Performing hot calendering at a temperature of 200 °C to make the side A and the side B closely fit the aluminum layer and the copper layer on the two sides, and calendering the composite current collector until a total thickness is as thin as 2 $\mu$m, of which the aluminum layer is approximately 0.40 $\mu$m thick, and the copper layer is approximately 1.60 $\mu$m thick; and
10) Performing rewinding.

**Embodiment 21**

Identical to Embodiment 19 except that a negative undercoat and a positive undercoat are added into the bipolar electrode plate, detailed data of which is shown in Table 1.

**<Preparing a negative undercoat in a bipolar electrode plate>**

Mixing conductive carbon black and the styrene butadiene rubber at a mass ratio of 95: 5, adding deionized water as a solvent, blending the mixture to form a slurry with a solid content of 80%, and stirring well. Coating the side A of the composite bipolar current collector with the slurry evenly, and drying the current collector at 110 °C to obtain a negative undercoat that is 5 $\mu$m in thickness.

**<Preparing a negative active material layer in a bipolar electrode plate>**

Mixing graphite as a negative active material, conductive carbon black, and the styrene butadiene rubber at a mass ratio of 96: 1.5: 2.5, adding deionized water as a solvent, blending the mixture to form a slurry with a solid content of 70%, and stirring well. Coating the negative undercoat with the slurry evenly, and drying the slurry at 110 °C to obtain a negative electrode plate that is 120 $\mu$m in thickness.

**<Preparing a positive undercoat in a bipolar electrode plate>**

Mixing conductive carbon black and the styrene butadiene rubber at a mass ratio of 97: 3, adding deionized water as a solvent, blending the mixture to form a slurry with a solid content of 85%, and stirring well. Coating the side B of the composite bipolar current collector with the slurry evenly, and drying the current collector at 110 °C to obtain a positive undercoat that is 3 $\mu$m in thickness.

**<Preparing a positive active material layer in a bipolar electrode plate>**

Mixing LiCoO$_2$ as a positive active material, conductive carbon black, and PVDF at a mass ratio of 97.5: 1.0: 1.5, adding NMP as a solvent, blending the mixture to form a slurry with a solid content of 75%, and stirring well. Coating the positive undercoat with the slurry evenly, and drying the slurry at 90 °C to obtain a positive electrode plate that is 100 μm in thickness.

**Embodiment 22**

Identical to Embodiment 21 except the following steps in <Preparing a negative undercoat in a bipolar electrode plate>: mixing polypyrrole (Ppy) and styrene butadiene rubber at a mass ratio of 95: 5, adding deionized water as a solvent, blending the mixture to form a slurry with a solid content of 80%, and stirring well; coating the side A of the composite bipolar current collector with the slurry evenly, and drying the current collector at 110 °C to obtain a negative undercoat that is 3 μm in thickness; and

In <Preparing a positive undercoat in a bipolar electrode plate>: mixing polypyrrole (Ppy) and styrene butadiene rubber at a mass ratio of 97: 3, adding deionized water as a solvent, blending the mixture to form a slurry with a solid content of 85%, and stirring well; Coating the side B of the composite bipolar current collector with the slurry evenly, and drying the current collector at 110 °C to obtain a positive undercoat that is 3 μm in thickness.

**Embodiment 23**

**<Preparing an electrode assembly>**

Stacking a double-side-coated negative electrode plate, a separator, and a double-side-coated positive electrode plate in sequence to form a stacked structure, and winding the entire stacked structure in such a way that the negative electrode plate is located outermost. The separator is a 15-μm-thick polyethylene (PE) film.

Stacking a double-side-coated negative electrode plate, a separator, and a double-side-coated positive electrode plate in sequence to form a stacked structure, and winding the entire stacked structure in such a way that the positive electrode plate is located outermost. The separator is a 15-μm-thick polyethylene (PE) film.

**<Preparing a bipolar lithium-ion battery>**

**<Preparing a bipolar electrode assembly>**

Putting a punch-molded aluminum plastic film into an assembly jig, with a pit side facing upward. Putting the electrode assembly A into the pit. Next, putting the bipolar current collector onto the electrode assembly A in such a way that a side of the bipolar current collector and that contains a positive active material faces downward, so that the active material coating regions correspond properly. Pressing tightly with an external force to obtain an assembled semi-finished product.

Putting the assembled semi-finished product into another assembly jig, and leaving a side of the bipolar current collector to face upward, where the side is coated with the negative active material. Putting the electrode assembly B onto the bipolar current collector, so that the active material coating regions correspond properly. Pressing tightly with an external force, and then overlaying the electrode assembly B with the punch-molded aluminum plastic film, with a pit side facing downward. Hot-sealing the peripheral edge by hot pressing to obtain an assembled electrode assembly. The rest is the same as that in Embodiment 19.

**Comparative Embodiment 1**

Identical to Embodiment 1 except that the bipolar current collector is a copper-aluminum-foil composite current collector.

The thickness of the copper-aluminum composite current collector is 20 μm.

**Comparative Embodiment 2**

Identical to Embodiment 1 except that the bipolar current collector is a stainless steel foil current collector.

The thickness of the stainless steel foil current collector is 20 μm.

## Comparative Embodiment 3

Identical to Embodiment 1 except that the bipolar current collector is compounded of a zero-dimensional conductive material and a polymer substrate material.

In the bipolar current collector, the zero-dimensional conductive material is dot-shaped carbon black particles, and the polymer substrate material is a PET substrate material. The dot-shaped carbon black particles are uniformly dispersed in a three-dimensionally arranged substrate without orientation. The thickness of the bipolar current collector is approximately 50 $\mu$m.

## Comparative Embodiment 4

Identical to Embodiment 1 except that the bipolar current collector is compounded of a one-dimensional conductive material and a polymer substrate material.

In the bipolar current collector, the one-dimensional conductive material is MWCNTs, and the polymer substrate material is a PET substrate material. The MWCNTs are uniformly dispersed in a three-dimensionally arranged substrate without orientation. The thickness of the bipolar current collector is approximately 50 $\mu$m.

## Comparative Embodiment 5

Identical to Embodiment 1 except that the bipolar current collector is compounded of a two-dimensional conductive material and a polymer substrate material.

In the bipolar current collector, the two-dimensional conductive material is graphene, and the polymer substrate material is a PET substrate material. The graphene is uniformly dispersed in a three-dimensionally arranged substrate without orientation. The thickness of the bipolar current collector is approximately 50 $\mu$m.

## Performance Test

Performing the following methods to test the bipolar current collector and the bipolar lithium-ion battery that are prepared in each embodiment and each comparative embodiment:

## Testing surface roughness of the material

Measuring the surface roughness by a contact measurement method. Using a probe pin of an instrument to contact the specimen surface, and swiping the probe pin gently along the surface to measure the surface roughness. Leaving a very sharp pin to settle vertically on the specimen surface, and moving the pin transversely. Because the working surface is rough and bumpy, the pin moves vertically up and down along with a profile of the specimen surface. Such tiny displacement is converted into an electrical signal through a circuit and amplified and computed to obtain a surface roughness parameter value of the workpiece. Alternatively, a surface profile may be plotted by using a recorder, and then the data is processed to obtain the surface roughness parameter value.

The specific test method is: calculating a difference between an average value of 5 highest profile peak heights and an average value of 5 highest profile trough depths within a specimen length (10 cm). This method is suitable for measuring a surface roughness Rz that ranges from 0.02 $\mu$m to 160 $\mu$m.

## Testing a thickness ratio between the M layer and the N layer of a composite bipolar current collector

Preparing a cross section of a specimen. Taking an SEM (Scanning Electron Microscope, scanning electron microscope) image, and analyzing elements to find an interface between M and N. A distance from the interface to the outer edge of the M layer is L1, and a distance from the interface to the outer edge of the N layer is L2. The ratio of L1 to L2 is the ratio value.

The layer thickness of the bipolar current collector is denoted as H.

## Testing an electron resistivity R in the Z direction

Clamping the composite bipolar current collector on both sides by using two clamping plates of a fixed equal area. Measuring a resistance value, and then dividing the resistance value by the thickness and then multiplying the quotient by the area of the clamping plate.

**Measuring the bonding force of the film to the bipolar current collector**

1) Taking out an electrode plate from a fresh electrode assembly that has not undergone any charge-and-discharge cycle, and cutting the electrode plate into strips, each strip being 3 cm in width and 10 to 16 cm in length;
2) Affixing special-purpose strong double-sided tape of 2 cm in width and 9 to 15 cm in length onto the surface of a steel sheet;
3) Affixing the intercepted electrode plate specimen onto the double-sided tape, with the test side facing downward. Inserting a paper tape beneath the electrode plate and fixing the paper tape by using a crepe adhesive, where the width of the paper tape is equal to the width of the electrode plate, and the length of the paper tape is 8 to 20 cm greater than the length of the electrode plate specimen;
4) Fixing, by using a clamp, the end at which no electrode plate is affixed on the steel sheet. Placing the steel sheet vertically, folding the paper tape upward, and fixing the paper tape by using an upper clamp.
5) Pulling the paper tape vertically upward at a speed of 5 cm/min to remove the double-sided tape together with the bonded film coating away from the current collector, and measuring the force that pulls the film coating apart. Calculating a ratio of the measured force to a width of the electrode plate. Repeating the measurement and obtaining an average of the measured values to obtain the bonding force.

The bonding force to the positive electrode plate is $F^+$, and the bonding force to the negative electrode plate is $F^-$.

**Testing a discharge energy density (ED)**

Leaving a lithium-ion battery to stand under a normal temperature for 30 minutes, charging the battery at a constant current rate of 0.05 C until the voltage reaches 8.8 V (rated voltage), and then discharging the electrochemical device at a 0.05 C rate until the voltage reaches 6.0 V. Repeating the foregoing charge-and-discharge steps for 3 cycles to complete chemical formation of the electrochemical device under test. Charging the electrochemical device at a constant current rate of 0.1 C until a voltage of 8.8 V after completion of the chemical formation, and then discharging the electrochemical device at a rate of 0.1 C until a voltage of 6.0 V. Recording a discharge capacity at this time, and then calculating an energy density at the time of discharging at 0.1 C:

$$\text{Mass energy density (Wh/kg)} = \text{discharge energy (Wh)/weight of the lithium-ion battery (kg)}$$

**Testing a $Q_{50}/Q_0$ ratio (that is, 50th-cycle discharge capacity/first-cycle discharge capacity) (%)**

Charging the lithium-ion battery at a constant current of 0.5 C under a temperature of 25 °C until the voltage reaches 8.8 V, and then charging the battery at a constant voltage until the current reaches 0.025 C. Leaving the battery to stand for 5 minutes, and then discharging the battery at 0.5 C until the voltage reaches 6.0 V. Measuring the capacity in this step as an initial capacity, and then performing 50 cycles by charging at 0.5 C and discharging at 0.5 C. Calculating a ratio of the capacity of the lithium-ion battery to the initial capacity.

**Table 1 Test parameters and test results in different embodiments and comparative embodiments**

| | Rz (μm) | L1 (μm) | L2 (μm) | L1/L2 | L1' (μm) | L2' (μm) | Porosity of porous substrate | R (Ω·cm) | Porous substrate | M | N | H (μm) | ED (Wh/kg) | Q50/Q0 (%) | F+ (N/m) | F- (N/m) |
|---|---|---|---|---|---|---|---|---|---|---|---|---|---|---|---|---|
| Embodiment 1 | 10 | 33.33 | 66.67 | 0.5 | 45.00 | 95.00 | 60% | $1.27 \times 10^{-9}$ | PI | Cu | Al | 100 | 233 | 87.10 | 17.3 | 15.5 |
| Embodiment 2 | 1 | 6.67 | 13.33 | 0.5 | 9.00 | 19.00 | 60% | $1.26 \times 10^{-9}$ | PI | Cu | Al | 20 | 234 | 88.90 | 17.1 | 15.4 |
| Embodiment 3 | 0.2 | 6.67 | 13.33 | 0.5 | 9.00 | 19.00 | 60% | $1.29 \times 10^{-9}$ | PI | Cu | Al | 20 | 233 | 86.60 | 14.5 | 12.9 |
| Embodiment 4 | 0.05 | 6.67 | 13.33 | 0.5 | 9.00 | 19.00 | 60% | $1.27 \times 10^{-9}$ | PI | Cu | Al | 20 | 233 | 86.00 | 12.9 | 11.3 |
| Embodiment 5 | 1 | 0.95 | 19.05 | 0.05 | 1.33 | 26.67 | 60% | $1.38 \times 10^{-9}$ | PI | Cu | Al | 20 | 235 | 86.30 | 17.1 | 15.4 |
| Embodiment 6 | 1 | 16.00 | 4.00 | 4 | 22.4 | 5.6 | 60% | $1.21 \times 10^{-9}$ | PI | Cu | Al | 20 | 232 | 88.90 | 17.2 | 15.4 |
| Embodiment 7 | 1 | 19.05 | 0.95 | 20 | 26.67 | 1.33 | 60% | $1.06 \times 10^{-9}$ | PI | Cu | Al | 20 | 231 | 86.20 | 17.1 | 15.3 |
| Embodiment 8 | 1 | 0.95 | 19.05 | 0.05 | 1.33 | 26.67 | 20% | $2.00 \times 10^{-4}$ | PI | Ti | Ti | 20 | 234 | 85.80 | 16.4 | 14.3 |
| Embodiment 9 | 1 | 16.00 | 4.00 | 4 | 22.4 | 5.6 | 40% | $2.00 \times 10^{-7}$ | PI | Cu | Al | 20 | 235 | 88.80 | 17.1 | 15.5 |
| Embodiment 10 | 1 | 10.00 | 10.00 | 1 | 14.00 | 14.00 | 90% | $2.00 \times 10^{-10}$ | Ni | Ag | Ag | 20 | 222 | 88.40 | 14.2 | 15.1 |
| Embodiment 11 | 1 | 16.00 | 4.00 | 4 | 22.4 | 5.6 | 60% | $1.06 \times 10^{-9}$ | Carbon felt | Cu | Al | 20 | 233 | 89.10 | 17.2 | 15.4 |
| Embodiment 12 | 1 | 16.00 | 4.00 | 4 | 22.4 | 5.6 | 60% | $1.32 \times 10^{-9}$ | PET | Cu | Al | 20 | 234 | 88.80 | 17.1 | 15.3 |
| Embodiment 13 | 1 | 16.00 | 4.00 | 4 | 22.4 | 5.6 | 60% | $8.70 \times 10^{-10}$ | Stainless steel | Cu | Al | 20 | 227 | 8900 | 17.1 | 15.3 |
| Embodiment 14 | 1 | 16.00 | 4.00 | 4 | 22.4 | 5.6 | 60% | $1.45 \times 10^{-9}$ | PI | Ni | Al | 20 | 235 | 88.70 | 16.2 | 15.3 |
| Embodiment 15 | 1 | 16.00 | 4.00 | 4 | 22.4 | 5.6 | 60% | $1.37 \times 10^{-9}$ | PI | Ti | Al | 20 | 234 | 88.60 | 16.1 | 15.3 |
| Embodiment 16 | 1 | 16.00 | 4.00 | 4 | 22.4 | 5.6 | 60% | $1.26 \times 10^{-9}$ | PI | Cu | Ni | 20 | 233 | 88.80 | 17.1 | 14.3 |
| Embodiment 17 | 1 | 16.00 | 4.00 | 4 | 22.4 | 5.6 | 60% | $1.23 \times 10^{-9}$ | PI | Cu | Ti | 20 | 233 | 88.50 | 17.2 | 14.3 |
| Embodiment 18 | 1 | 800.0 | 200.00 | 4 | 1120.0 | 280.00 | 60% | $1.44 \times 10^{-9}$ | PI | Cu | Al | 1000 | 231 | 88.60 | 17.1 | |

(continued)

| | Rz (μm) | L1 (μm) | L2 (μm) | L1/L2 | L1' (μm) | L2' (μm) | Porosity of porous substrate | R (Ω·cm) | Porous substrate | M | N | H (μm) | ED (Wh/kg) | $Q_{50}/Q_0$ (%) | $F^+$ (N/m) | $F^-$ (N/m) |
|---|---|---|---|---|---|---|---|---|---|---|---|---|---|---|---|---|
| Embodiment 19 | 1 | 8.00 | 2.00 | 4 | 11.20 | 2.80 | 60% | $1.18 \times 10^{-09}$ | PI | Cu | Al | 10 | 236 | 89.00 | 17.1 | 15.3 |
| Embodiment 20 | 1 | 1.60 | 0.40 | 4 | 2.24 | 0.56 | 60% | $1.14 \times 10^{-09}$ | PI | Cu | Al | 2 | 237 | 88.70 | 17.2 | 15.3 |
| Embodiment 21 | 1 | 8.00 | 2.00 | 4 | 11.20 | 2.80 | 60% | $1.08 \times 10^{-09}$ | PI | Cu | Al | 10 | 241 | 90.80 | 20.8 | 18.6 |
| Embodiment 22 | 1 | 8.00 | 2.00 | 4 | 11.20 | 2.80 | 60% | $1.14 \times 10^{-09}$ | PI | Cu | Al | 10 | 239 | 90.20 | 22.9 | 20.2 |
| Embodiment 23 | 1 | 8.00 | 2.00 | 4 | 11.20 | 2.80 | 60% | $1.17 \times 10^{-09}$ | PI | Cu | Al | 10 | 246 | 89.60 | 17.1 | 15.2 |
| Comparative Embodiment 1 | 0.05 | - | - | - | - | - | - | $5.20 \times 10^{-10}$ | - | - | - | 20 | 225 | 85.40 | 12.7 | 11.2 |
| Comparative Embodiment 2 | 0.05 | - | - | - | - | - | - | $9.30 \times 10^{-10}$ | - | | - | 20 | 224 | 85.90 | 10.3 | 9.1 |
| Comparative Embodiment 3 | 0.2 | - | - | - | - | - | - | 8.20 | - | - | - | 50 | 239 | 86.60 | 7.5 | 8.4 |
| Comparative Embodiment 4 | 0.31 | - | - | - | - | - | - | 3.20 | - | - | - | 50 | 240 | 86.70 | 7.8 | 8.9 |
| Comparative Embodiment 5 | 0.45 | - | - | - | - | - | - | 4.40 | - | - | - | 50 | 239 | 86.50 | 8.0 | 9.3 |

As shown in Table 1, compared with Comparative Embodiments 1 and 2, that is, compared with the lithium-ion battery that employs a conventional copper-aluminum composite foil current collector or a conventional stainless steel foil current collector, the lithium-ion battery according to an embodiment of this application is improved in the energy density, the ratio of the 50th-cycle discharge capacity to the first-cycle discharge capacity, and the bonding force of the film to the bipolar current collector.

Compared with Comparative Embodiments 3 to 5, the energy density of the lithium-ion batteries according to an embodiment of this application basically does not change, and the ratio of the 50th-cycle discharge capacity to the first-cycle discharge capacity in Embodiments 1 to 2, 6, and 9 to 23 is increased. The bonding force of the film to the bipolar current collector according to all embodiments of this application is increased.

As can be seen from Embodiments 1 to 4, with the increase of the surface roughness of the bipolar current collector, the bonding force between the bipolar current collector and the positive and negative electrode plates shows a tendency to increase. As can be seen from Embodiments 5 to 7, with the increase of the thickness ratio of the bipolar current collector, the mass energy density of the lithium-ion battery shows a tendency to decrease. The ratio of the 50th-cycle discharge capacity to the first-cycle discharge capacity increases first and then decreases. Overall, the thickness ratio needs to avoid being excessive or deficient. As can be seen from Embodiments 17 to 20, with the increase of the thickness of the bipolar current collector, the mass energy density of the lithium-ion battery decreases. The ratio of the 50th-cycle discharge capacity to the first-cycle discharge capacity increases first and then decreases. Overall, the thickness of the bipolar current collector needs to avoid being excessive or deficient.

To sum up, the performance of the lithium-ion battery according to an embodiment of this application is higher than that of the comparative embodiment.

The foregoing descriptions are merely exemplary embodiments of this application, but are not intended to limit this application. Any modifications, equivalent substitutions, and improvements made without departing from the spirit and principles of this application still fall within the protection scope of this application.

## Claims

1. A bipolar current collector, comprising a porous substrate, a first metal M, and a second metal N, wherein the first metal M exists on one surface of the porous substrate, the second metal N exists on another surface of the porous substrate, and at least one of the first metal M or the second metal N exists inside the porous substrate;

   a material of the porous substrate comprises at least one of a carbon material, a polymer material, or a third metal; and
   a porosity of the porous substrate is 20% to 90%.

2. The bipolar current collector according to claim 1, wherein the carbon material comprises at least one of a single-walled carbon nanotube film, a multi-walled carbon nanotube film, a carbon felt, a porous carbon film, carbon black, acetylene black, fullerene, conductive graphite, or graphene.

3. The bipolar current collector according to claim 1, wherein the polymer material comprises at least one of polyethylene terephthalate, polybutylene terephthalate, polyethylene naphthalate, polyether ether ketone, polyimide, polyamide, polyethylene glycol, polyamide imide, polycarbonate, cyclic polyolefin, polyphenylene sulfide, polyvinyl acetate, polytetrafluoroethylene, polymethylene naphthalene, polyvinylidene difluoride, polyethylene naphthalate, polypropylene carbonate, poly(vinylidene difluoride-co-hexafluoropropylene), poly(vinylidene difluoride-co-chlorotrifluoroethylene), organosilicon, vinylon, polypropylene, polyethylene, polyvinyl chloride, polystyrene, polyether nitrile, polyurethane, polyphenylene ether, polyester, polysulfone, or a derivative thereof.

4. The bipolar current collector according to claim 1, wherein the third metal, the first metal M, and the second metal N each independently comprise at least one of Cu, Al, Ni, Ti, Ag, Au, Pt, or stainless steel.

5. The bipolar current collector according to claim 1, wherein a thickness of a layer formed by the first metal M on the surface of the porous substrate is 0.95 $\mu$m to 900 $\mu$m; and a thickness of a layer formed by the second metal N on the surface of the porous substrate is 0.95 $\mu$m to 900 $\mu$m.

6. The bipolar current collector according to claim 1, wherein a thickness of the bipolar current collector is 2 $\mu$m to 1000 $\mu$m.

7. The bipolar current collector according to claim 1, wherein a surface roughness of the bipolar current collector is

0.05 $\mu$m to 10 $\mu$m.

8. The bipolar current collector according to claim 1, wherein a thickness ratio between a layer formed by the first metal M on the surface of the porous substrate and a layer formed by the second metal N on the surface of the porous substrate is 0.05 to 20.

9. The bipolar current collector according to claim 1, wherein an electron resistivity of the bipolar current collector in a Z direction is $2.00 \times 10^{-10}$ $\Omega \cdot$cm to $2.00 \times 10^{-4}$ $\Omega \cdot$cm.

10. The bipolar current collector according to claim 1, wherein the bipolar current collector satisfies at least one of the following features:

(a) a thickness of the bipolar current collector is 5 $\mu$m to 50 $\mu$m;
(b) a surface roughness of the bipolar current collector is 0.2 $\mu$m to 5 $\mu$m;
(c) a thickness ratio between a layer formed by the first metal M on the surface of the porous substrate and a layer formed by the second metal N on the surface of the porous substrate is 0.2 to 5;
(d) an electron resistivity of the bipolar current collector in a Z direction is $2.00 \times 10^{-10}$ $\Omega \cdot$cm to $2.00 \times 10^{-6}$ $\Omega \cdot$cm; and
(e) a porosity of the porous substrate is 40% to 70%.

11. The bipolar current collector according to claim 1, wherein the bipolar current collector satisfies at least one of the following features:

(a) a thickness of a layer formed by the first metal M on the surface of the porous substrate is 0.40 $\mu$m to 13.33 $\mu$m; and a thickness of a layer formed by the second metal N on the surface of the porous substrate is 0.40 $\mu$m to 13.33 $\mu$m;
(b) a thickness of the bipolar current collector is 5 $\mu$m to 20 $\mu$m;
(c) a surface roughness of the bipolar current collector is 0.5 $\mu$m to 2 $\mu$m; and
(d) an electron resistivity of the bipolar current collector in a Z direction is $2.00 \times 10^{-10}$ $\Omega \cdot$cm to $2.00 \times 10^{-8}$ $\Omega \cdot$cm.

12. An electrochemical device, comprising at least two electrode assemblies and the bipolar current collector according to any one of claims 1 to 11, wherein the bipolar current collector is located between the two electrode assemblies.

13. An electronic device, wherein the electronic device comprises the electrochemical device according to claim 12.

FIG. 1

FIG. 2

1

2

3

1
N

2

N

1

M

Hot calender roll

Bipolar current collector

Hot calender roll

FIG. 3

## INTERNATIONAL SEARCH REPORT

| International application No. |
| --- |
| **PCT/CN2020/099422** |

| | |
| --- | --- |
| **A.** | **CLASSIFICATION OF SUBJECT MATTER** |

H01M 4/66(2006.01)i;  H01M 4/80(2006.01)i

According to International Patent Classification (IPC) or to both national classification and IPC

| | |
| --- | --- |
| **B.** | **FIELDS SEARCHED** |

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; WOTXT; EPTXT; USTXT; CNKI: 双极性, 集流体, 多孔基体, 金属, 孔隙率, bipolar, current collector, porous substrate, metal, porosity

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | CN 109994740 A (NINGDE AMPEREX TECHNOLOGY LTD.) 09 July 2019 (2019-07-09) description, paragraphs 5-104, figures 1A-4 | 1, 3-13 |
| X | CN 109980234 A (NINGDE AMPEREX TECHNOLOGY LTD.) 05 July 2019 (2019-07-05) description paragraphs 5-93, figures 1A-2 | 1, 3-13 |
| Y | CN 109786755 A (NO.18 INST., CHINA ELECTRONIC SCIENCE AND TECHNOLOGY GROUP CORP.) 21 May 2019 (2019-05-21) description, paragraphs 2-66, and figures 1-12 | 1-13 |
| Y | CN 108365227 A (DYNABAT NEW ENERGY SCIENCE & TECH CO., LTD.) 03 August 2018 (2018-08-03) description, paragraphs 6-42 | 1-13 |
| Y | CN 2588551 Y (LYU, Ming et al.) 26 November 2003 (2003-11-26) description page 1 line 10 to page 2 last line, figures 1-2 | 1, 4-13 |
| Y | CN 108390068 A (HEFEI GUOXUAN HIGH-TECH POWER ENERGY CO., LTD.) 10 August 2018 (2018-08-10) description, paragraphs 4-18, and figures 1 and 2 | 1, 3-13 |

☑ Further documents are listed in the continuation of Box C.     ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 March 2021** | **30 March 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2020/099422** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 102623756 A (CHANGZHOU YOUTEKE NEW ENERGY TECHNOLOGY CO., LTD.) 01 August 2012 (2012-08-01)<br>      entire document | 1-13 |
| A | CN 109216703 A (ZHUHAI COSLIGHT BATTERY CO., LTD.) 15 January 2019 (2019-01-15)<br>      entire document | 1-13 |
| A | JP 2010073500 A (NISSAN MOTOR CO., LTD.) 02 April 2010 (2010-04-02)<br>      entire document | 1-13 |

Form PCT/ISA/210 (second sheet) (January 2015)

24

## INTERNATIONAL SEARCH REPORT
### Information on patent family members

International application No.

**PCT/CN2020/099422**

| Patent document cited in search report | | | Publication date (day/month/year) | Patent family member(s) | | | Publication date (day/month/year) |
|---|---|---|---|---|---|---|---|
| CN | 109994740 | A | 09 July 2019 | US | 2020313155 | A1 | 01 October 2020 |
| CN | 109980234 | A | 05 July 2019 | US | 2020313198 | A1 | 01 October 2020 |
| CN | 109786755 | A | 21 May 2019 | None | | | |
| CN | 108365227 | A | 03 August 2018 | None | | | |
| CN | 2588551 | Y | 26 November 2003 | None | | | |
| CN | 108390068 | A | 10 August 2018 | None | | | |
| CN | 102623756 | A | 01 August 2012 | None | | | |
| CN | 109216703 | A | 15 January 2019 | None | | | |
| JP | 2010073500 | A | 02 April 2010 | JP | 5386900 | B2 | 15 January 2014 |

Form PCT/ISA/210 (patent family annex) (January 2015)